(19) Europäisches Patentamt
European Patent Office
Office européen des brevets

(11) **EP 4 660 606 A1**

(12) **EUROPÄISCHE PATENTANMELDUNG**

(43) Veröffentlichungstag:
**10.12.2025 Patentblatt 2025/50**

(21) Anmeldenummer: 25180998.4

(22) Anmeldetag: **05.06.2025**

(51) Internationale Patentklassifikation (IPC):
**G01N 15/02** (2024.01)    **G01N 15/14** (2024.01)
**G01N 15/0227** (2024.01)    G01N 15/00 (2024.01)

(52) Gemeinsame Patentklassifikation (CPC):
**G01N 15/0227; G01N 15/0255; G01N 15/1459;**
G01N 2015/0019; G01N 2015/0294;
G01N 2015/1493; G01N 2015/1497

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **05.06.2024 DE 102024115701**

(71) Anmelder: **Fritsch GmbH**
**55743 Idar-Oberstein (DE)**

(72) Erfinder:
• **DECKER, Dominique Michael**
**67746 Langweiler (DE)**
• **PALUGA, Maik**
**66625 Nohfelden (DE)**
• **DINGES, Juri**
**55743 Idar-Oberstein (DE)**
• **CROLLY, Günther**
**67657 Kaiserslautern (DE)**

(74) Vertreter: **Blumbach · Zinngrebe Patentanwälte
PartG mbB
Alexandrastraße 5
65187 Wiesbaden (DE)**

(54) **VERFAHREN UND VORRICHTUNG ZUR ERMITTLUNG VON FORM UND/ODER GRÖSSE VON PARTIKELN**

(57)    Die Erfindung sieht ein verbessertes Verfahren zur Ermittlung von Form und/oder Größe von Partikeln vor, bei dem eine Vielzahl Partikel (200) durch einen vorgegebenen Messbereich (110) geleitet wird, wobei die Freiheitsgrade der Bewegung der Partikel (200) durch ein Führungselement (120) eingeschränkt sind, während sich die Partikel (200) durch den Messbereich (110) bewegen. Ferner sieht das Verfahren vor, mit einem Kamerasystem (140) wenigstens ein digitales Bild der Partikel (201, 202), die sich zum Aufnahmezeitpunkt im Messbereich (110) befinden, aufzunehmen und mittels einer Auswerteeinheit Form und/oder Größe der abgebildeten Partikel durch Auswerten des wenigstens einen aufgenommenen digitalen Bildes zu ermitteln, wobei der Messbereich mit einer Lichtquelle (130) beleuchtet wird.

Fig. 1

EP 4 660 606 A1

**Beschreibung**

Die Erfindung betrifft allgemein die Messung von Partikeleigenschaften, und insbesondere ein Verfahren und eine Vorrichtung zur Ermittlung von Form und/oder Größe von Partikeln, insbesondere unter Verwendung einer dynamischen Bildanalyse.

In vielen industriellen Anwendungen wird beispielsweise zur Qualitätskontrolle oder zur Prozessüberwachung eine Analyse von Partikelgrößen durchgeführt. Die Partikelgröße beschreibt die Abmessungen von festen, flüssigen oder gasförmigen Partikeln, d.h. insbesondere Korngröße, Tröpfchengröße oder Blasengröße.

Zur Bestimmung von Partikelgrößen sind verschiedene Methoden bekannt, wie beispielsweise Siebanalyse, Bildanalyse oder Lichtstreuung. Je nach Größe und Art der Partikel sind die jeweiligen Methoden zur Bestimmung der Partikelgrößen unterschiedlich gut geeignet.

Bei der Methode der dynamischen Bildanalyse (DIA) werden mit einer digitalen Kamera in schneller Folge Bilder der zu untersuchenden Partikel aufgenommen und die aufgenommenen Bilder analysiert, wobei die Partikelgröße und/oder die Partikelform einzelner Partikel ermittelt wird. Durch die Auswertung von Bildern der zu analysierenden Partikel bietet die dynamische Bildanalyse vorteilhaft die Möglichkeit, neben der Größe auch die Form der Partikel zu analysieren. Bei der dynamischen Bildanalyse werden typischerweise in kurzer Zeit eine Vielzahl von Bildern aufgenommen und analysiert, so dass eine sehr hohe Anzahl an Partikeln in kurzer Zeit analysiert werden kann.

Typischerweise wird bei einer Trockenmessung mittels dynamischer Bildanalyse ein Strom von Partikeln, beispielsweise Pulver oder Schüttgüter, im freien Fall vor einer Digitalkamera vorbeigeführt, wobei mit hoher Frequenz digitale Bilder im Gegenlicht eines Blitzlichtes aufgenommen werden. Dieses Messprinzip ist vergleichbar mit dem Prinzip der Durchlicht-Mikroskopie, wobei ein hoher Kontrast zwischen Partikelbild und hell ausgeleuchtetem Hintergrund erzielt wird, wodurch die nachfolgende Bildanalyse vereinfacht wird. Eine Partikelmessung mit dynamischer Bildanalyse dauert üblicherweise einige Minuten und erfasst je nach Probe in der Regel einige zehntausend bis viele Millionen Partikel.

Bedingt durch das Messprinzip einer zweidimensionalen Abbildung eines frei fallenden dreidimensionalen Körpers ist die Partikelform nur eingeschränkt ermittelbar, da die Partikel im freien Fall typischerweise ihre räumliche Orientierung verändern, wobei je nach Orientierung eine unterschiedliche Abbildung resultiert, insbesondere bei länglich geformten Partikeln. Zudem können bei einer Aufnahme mehrere Partikel entlang der optischen Achse voreinander positioniert sein, was zu überlappenden Abbildungen führt.

Der Erfindung liegt die Aufgabe zugrunde, einen Weg aufzuzeigen, wie Partikelformen und/oder Partikelgrößen auf vereinfachte und/oder verbesserte Weise ermittelt werden können, insbesondere mittels dynamischer Bildanalyse.

Diese Aufgabe wird durch die Merkmale der unabhängigen Ansprüche gelöst. Vorteilhafte Ausführungsformen sind Gegenstand der abhängigen Ansprüche, wobei die angegebenen Merkmale und Vorteile im Wesentlichen für alle unabhängigen Ansprüche gelten können.

Es ist dementsprechend ein Verfahren zur Ermittlung von Form und/oder Größe von Partikeln vorgesehen, bei dem eine Vielzahl Partikel durch einen vorgegebenen Messbereich geleitet wird, wobei die Freiheitsgrade der Bewegung der Partikel durch ein Führungselement eingeschränkt sind, während sich die Partikel durch den Messbereich bewegen. Der Messbereich wird mit einer Lichtquelle beleuchtet und es wird mit einer Kamera wenigstens ein digitales Bild der Partikel, die sich zum Aufnahmezeitpunkt im Messbereich befinden, aufgenommen und das wenigstens eine aufgenommene digitale Bild mittels einer Auswerteeinheit ausgewertet, wobei die Auswerteeinheit die Form und/oder die Größe der in dem wenigstens einen aufgenommenen digitalen Bild abgebildeten Partikel ermittelt.

Vorteilhaft wird jeweils ein digitales Bild aufgenommen, welches Abbildungen wenigstens eines Partikels umfasst, vorzugsweise Abbildungen einer Mehrzahl von Partikeln. Die aufgenommenen digitalen Bilder werden vorzugsweise jeweils einzeln von der Auswerteeinheit ausgewertet, wobei anzumerken ist, dass jedes der digitalen Bilder vorteilhaft mit einer einzigen Kamera in einer einzigen Beobachtungsrichtung aufgenommen wird. Das Ermitteln der Form und/oder der Größe der jeweils in einem aufgenommenen digitalen Bild abgebildeten Partikel erfolgt dementsprechend durch Auswerten des jeweiligen aufgenommenen digitalen Bildes mittels der Auswerteeinheit. Die Kamera kann Teil eines Kamerasystems sein, das neben der Kamera weitere optische Komponenten wie beispielsweise ein Objektiv umfassen kann.

Mit dem Verfahren können vorzugsweise Form und/oder Größe trockener Partikel ermittelt werden, d.h. von Partikeln, die beispielsweise in Form eines Pulvers oder Schüttguts bereitgestellt werden. Bei den Partikeln kann es sich um verschiedenste Arten von Produkten handeln, wie zum Beispiel Lebensmittel, aber auch Düngemittel, Feuerfestprodukte, Glas, Keramik, Karbonprodukte, Katalysatoren, Kunststoffe, Metalle, Erze, Pharmaprodukte, Ruß, Kohle, Salze, Sand, Schleifmittel oder Zemente.

Vorzugsweise wird eine dynamische Bildanalyse durchgeführt und dementsprechend eine Vielzahl Bilder in kurzer Folge aufgenommen und ausgewertet, wobei die Aufnahmefrequenz vorteilhaft in Abhängigkeit der Anordnung des Führungselementes und/oder der Größe des Messbereichs gewählt wird. Vorteilhaft kann eine Aufnahmefrequenz gewählt werden, die größer als 50 Bilder pro Sekunde ist.

Das Auswerten eines der aufgenommenen digitalen Bilder umfasst vorzugsweise das Identifizieren wenigstens einer Abbildung eines individuellen Partikels in dem jeweiligen digitalen Bild und Ermitteln wenigstens eines Partikelparameters aus der Abbildung des individuellen Partikels. Vorteilhaft kann ein digitales Bild eine Vielzahl von Abbildungen individueller Partikel umfassen.

Der ermittelte Partikelparameter beschreibt vorzugsweise die Form und/oder die Größe des jeweils abgebildeten Partikels, wobei vorzugsweise ein Durchmesser ermittelt wird, insbesondere ein minimaler und ein maximaler Durchmesser, um daraus ein Aspektverhältnis, d.h. das Verhältnis zwischen minimalem und maximalem Durchmesser zu ermitteln. Ein Durchmesser kann auf unterschiedliche Weisen ermittelt werden, beispielsweise als Äquivalentdurchmesser oder als Feret-Durchmesser.

Ein Äquivalentdurchmesser berechnet sich aus dem Vergleich einer Eigenschaft des typischerweise unregelmäßigen Partikels mit einer Eigenschaft eines regelmäßig geformten Körpers. Ein geometrischer Äquivalentdurchmesser kann beispielsweise der Durchmesser eines projektionsflächengleichen Kreises sein, oder auch der Durchmesser einer volumengleichen oder oberflächengleichen Kugel. Der Feret-Durchmesser eines Partikels in einer vorgegebenen Richtung kann allgemein als der Abstand zwischen zwei parallelen Ebenen, die das Partikel senkrecht zu dieser Richtung begrenzen, definiert werden. Bei der zweidimensionalen Abbildung eines dreidimensionalen Partikels wird der Feret-Durchmesser als der Abstand zwischen zwei parallelen tangentialen Linien definiert. Ein maximaler Durchmesser kann auch als maximale Sehnenlänge einer Umrisskurve der zweidimensionalen Abbildung des Partikels definiert werden.

Der ermittelte Partikelparameter umfasst daher vorteilhaft einen der Parameter Äquivalentdurchmesser, minimaler Feret-Durchmesser, maximaler Feret-Durchmesser, maximale Sehnenlänge einer Umrisskurve der Abbildung, oder Aspektverhältnis. Je nach Einsatzzweck können vorteilhaft auch weitere Formparameter aus der Partikelabbildung ermittelt werden, wie zum Beispiel Zirkularität, Konvexität, Partikelquerschnittsfläche, konvexer Umfang, konvexe Hüllenfläche, Kontur-Hüllen-Fläche oder Umfang. Es kann auch eine vorgegebene mathematische Form, beispielsweise eines Kreises oder einer Ellipse, an die Umrisskurve der Partikelabbildung gefittet werden, wobei ein Durchmesser und/oder ein Aspektverhältnis aus diesem Fit ermittelt wird. Ferner können Partikelgrößenverteilungen für eine Vielzahl Partikel ermittelt werden, sowie daraus abgeleitete Parameter, wie beispielsweise ein Sauterdurchmesser.

Fehler bei der Ermittlung der oben genannten Parameter können beispielsweise auftreten, wenn sich Abbildungen mehrerer Partikel im Bild überlappen, oder wenn aufgrund der Ausrichtung des jeweils abgebildeten Partikels relativ zur optischen Achse der Kamera, mit der das Bild aufgenommen wird, der reale maximale Durchmesser des dreidimensionalen Partikels aus der zweidimensionalen Abbildung nicht ermittelbar ist.

Das Führungselement schränkt die Freiheitsgrade der Bewegung der Partikel daher vorzugsweise derart ein, dass ein Partikel so abgebildet wird, dass der zu ermittelnde Parameter möglichst fehlerfrei ermittelt werden kann.

Besonders vorteilhaft ist das Führungselement als Gleitbahn ausgebildet, welche so angeordnet ist, dass die Oberfläche der Gleitbahn um einen vorgegebenen Neigungswinkel geneigt ist, so dass sich die Partikel unter der Wirkung der Gravitationskraft entlang der Oberfläche der Gleitbahn durch den Messbereich bewegen. Die Oberfläche der Gleitbahn ist somit vorteilhaft so ausgestaltet, dass die Partikel darauf unter der Wirkung der Gravitationskraft gleiten oder rutschen. In diesem Sinne kann die Gleitbahn auch als Rutschbahn bezeichnet werden. Auf der Gleitbahn gleitende Partikel richten sich unter der Wirkung der Schwerkraft so aus, dass ihr Schwerpunkt möglichst niedrig ist, wodurch sich die Richtung des maximalen Durchmessers des gleitenden Partikels im Wesentlichen parallel zur Ebene der Gleitbahn ausrichtet, wobei der maximale Durchmesser eines länglichen Partikels typischerweise entlang der Längsachse des Partikels verläuft. Es kann vorteilhaft vorgesehen sein, den Neigungswinkel des Führungselementes zu variieren, beispielsweise abhängig von der Art, Anzahl, Form und/oder Größe der Partikel, oder auch abhängig von der Oberflächenbeschaffenheit des Führungselementes. Dementsprechend ist das Führungselement vorteilhaft dazu ausgebildet, mit einem einstellbaren Neigungswinkel angeordnet zu werden, beispielsweise mittels einer Einrichtung zum Einstellen des Neigungswinkels.

Die optische Achse der Kamera verläuft daher vorzugsweise senkrecht zur Oberfläche der Gleitbahn, um den maximalen Partikeldurchmesser möglichst fehlerfrei zu ermitteln.

Bei bestehenden Geräten zur dynamischen Bildanalyse ist typischerweise vorgesehen, dass die Partikel im freien Fall vor einer Digitalkamera vorbeigeführt werden, wobei die optische Achse der Kamera zweckmäßigerweise waagerecht verläuft.

Die Erfindung kann vorteilhaft vorsehen, ein bestehendes Gerät derart zu modifizieren, dass es zur Durchführung des Verfahrens eingesetzt werden kann, wobei zu diesem Zweck insbesondere ein Führungselement, beispielsweise in Form einer Gleitbahn, eingebaut wird. Dabei kann es aufwändig sein, die optischen Komponenten derart umzubauen, dass die optische Achse senkrecht zur Oberfläche der Gleitbahn verläuft.

Bei einer waagerechten Anordnung der optischen Achse und einem geneigten Führungselement wird jedoch die Form eines Partikels je nach Ausrichtung des Partikels unterschiedlich abgebildet. Die Erfinder haben aber erkannt, dass sich dies rechnerisch korrigieren lässt. Das Verfahren sieht daher in einer vorteilhaften Variante vor, dass die optische Achse der Kamera waagerecht verläuft, wobei das Ermitteln der Form und/oder der Größe eines abgebildeten Partikels eine Umrechnung in Abhängigkeit des Neigungswinkels des Führungselementes und in Abhängigkeit der Orientierung des jeweils abgebildeten Partikels umfasst.

Vorteilhaft erfolgt die Aufnahme der Bilder der Partikel im Gegenlicht eines Blitzlichtes, beispielsweise eines LED-Stroboskoplichtes, wobei die Lichtquelle und die Kamera vorzugsweise auf gegenüberliegenden Seiten des Führungselementes angeordnet sind, und wobei die Partikel als Schattenprojektion abgebildet werden. Zu diesem Zweck ist das Führungselement vorzugsweise zumindest teilweise optisch transparent.

In einer bevorzugten Ausführungsform des Verfahrens werden die Partikel dem Führungselement über eine Zuführrinne einer Zuführeinrichtung zugeführt, wobei die Zuführeinrichtung dazu ausgebildet ist, Partikel mit einer einstellbaren Zuführgeschwindigkeit über die Zuführrinne zuzuführen.

Vorteilhaft kann die Zuführgeschwindigkeit in Abhängigkeit des Neigungswinkels des Führungselementes derart eingestellt werden, dass sich die Partikel während der Führung durch das Führungselement einzeln, ohne Berührung weiterer Partikel, bewegen. Auf diese Weise wird vorteilhaft eine überlappende Abbildung mehrerer Partikel vermieden.

Wie oben ausgeführt, richten sich auf der Gleitbahn gleitende Partikel so aus, dass ihr Schwerpunkt möglichst niedrig ist, wodurch sich die Richtung des maximalen Durchmessers des gleitenden Partikels im Wesentlichen parallel zur Ebene der Gleitbahn ausrichtet. Vorzugsweise weist dazu die Anfangsgeschwindigkeit der Partikel bei Erreichen der Gleitbahn keine signifikante Geschwindigkeitskomponente senkrecht zur Ebene der Gleitbahn auf und die Partikel gleiten störungsfrei entlang der Gleitbahn. Mit anderen Worten, es wird vorzugsweise ein Hüpfen der Partikel vermieden, d.h. die Partikel sind vorzugsweise in Kontakt mit dem Führungselement, insbesondere in Kontakt mit der Oberfläche der Gleitbahn, während sich die Partikel durch den Messbereich bewegen.

Um ein Hüpfen der Partikel zu vermeiden, ist die Zuführrinne vorteilhaft über ein Verbindungselement mit dem Führungselement verbunden ist, wobei das Verbindungselement insbesondere ein flexibles Material umfasst.

Das Verfahren kann besonders vorteilhaft zum Ermitteln von Form und/oder Größe von Partikeln eingesetzt werden, die im Wesentlichen eine längliche Form, insbesondere im Wesentlichen eine zylindrische oder ellipsoide Form aufweisen.

Insbesondere für Partikel dieser Form kann das Führungselement und/oder die Zuführeinrichtung vorzugsweise dazu ausgebildet sein, die Längsachse der Partikel im Wesentlichen parallel zur Bewegungsrichtung der Partikel auszurichten. Auf diese Weise kann vorteilhaft eine Vereinzelung der Partikel und eine Ausrichtung der Partikel in eine Vorzugsrichtung erfolgen.

In einer vorteilhaften Ausführungsform weist der Querschnitt des Führungselementes und/oder der Zuführrinne der Zuführeinrichtung senkrecht zur Bewegungsrichtung der Partikel ein Profil mit einer Mehrzahl Senken auf. Die Form, Tiefe und/oder Anzahl der Senken kann vorteilhaft an die durchschnittliche Größe und/oder Form der Partikel angepasst werden, wobei das Profil insbesondere wellenförmig ausgebildet sein kann. Oberhalb der Zuführrinne der Zuführeinrichtung kann vorteilhaft ein Ausrichtungselement mit einer Mehrzahl senkrecht verlaufender flexibler Lamellen angeordnet sein, wobei die Form, Länge und/oder Anzahl der Lamellen insbesondere an die durchschnittliche Größe und/oder Form der Partikel angepasst sein kann.

Die oben genannte technische Aufgabe wird auch durch eine Vorrichtung zur Ermittlung von Form und/oder Größe von Partikeln gelöst, die eine Zuführeinrichtung mit einer Zuführrinne umfasst, wobei die Zuführeinrichtung dazu ausgebildet ist, Partikel mit einer einstellbaren Zuführgeschwindigkeit über die Zuführrinne einem vorgegebenen Messbereich zuzuführen, wobei die Vorrichtung ferner ein Führungselement umfasst, welches dazu ausgebildet ist, die Freiheitsgrade der Bewegung der Partikel einzuschränken, während sich die Partikel durch den Messbereich bewegen, sowie eine Lichtquelle zum Beleuchten des Messbereichs, eine Kamera zum Aufnehmen wenigstens eines digitalen Bildes der Partikel, die sich zum Aufnahmezeitpunkt im Messbereich befinden, und eine Auswerteeinheit zum Ermitteln der Form und/oder der Größe der abgebildeten Partikel durch Auswerten des wenigstens einen aufgenommenen digitalen Bildes.

Die Vorrichtung ist insbesondere zum Durchführen des oben beschriebenen Verfahrens ausgebildet. Dementsprechend kann die Vorrichtung jeweils vorteilhaft dazu ausgebildet sein, die jeweiligen oben beschriebenen Varianten des Verfahrens durchzuführen.

Die Erfindung wird nachfolgend anhand von Ausführungsbeispielen in Verbindung mit den Zeichnungen näher erläutert. Es zeigen:

Figur 1     eine schematische Darstellung einer ersten bevorzugten Ausführungsform einer Vorrichtung zur Ermittlung von Form und/oder Größe von Partikeln,

Figur 2     eine schematische Darstellung einer zweiten bevorzugten Ausführungsform einer Vorrichtung zur Ermittlung von Form und/oder Größe von Partikeln,

Figur 3     eine schematische Darstellung eines bevorzugten Querschnittsprofils eines Führungselementes oder einer Zuführrinne,

Figur 4     eine schematische Darstellung einer bevorzugten Ausführungsform eines Ausrichtungselementes, einsetzbar in einer der in den Figuren 1 und 2 dargestellten Vorrichtungen.

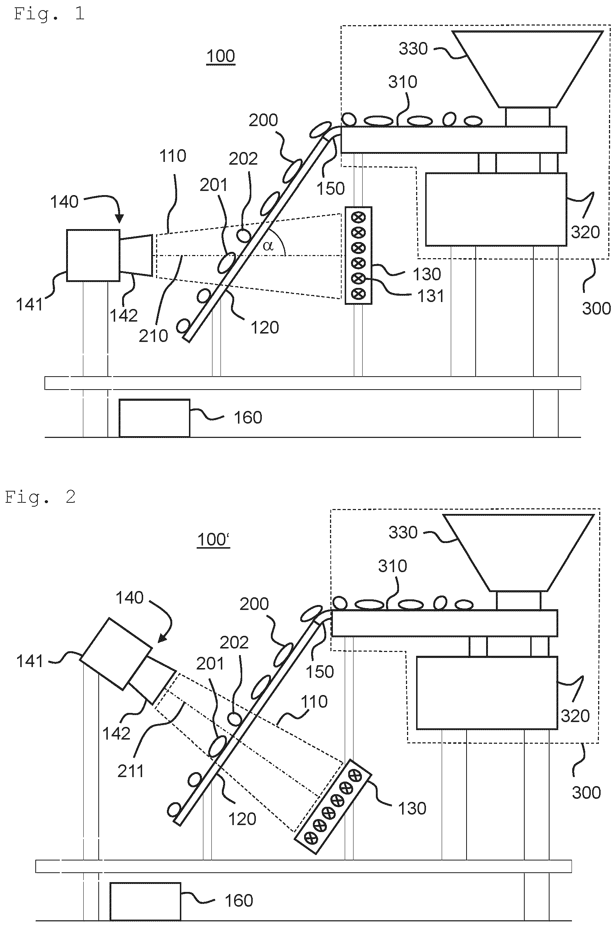

Fig. 1 zeigt eine schematische Darstellung einer ersten bevorzugten Ausführungsform einer Vorrichtung 100 zur Ermittlung von Form und/oder Größe von Partikeln 200. Die Vorrichtung 100 umfasst eine Zuführreinrichtung 300 mit einer Zuführrinne 310, wobei die Zuführreinrichtung 300 dazu ausgebildet ist, Partikel 200 mit einer einstellbaren Zuführgeschwindigkeit über die Zuführrinne 310 einem vorgegebenen Messbereich 110 zuzuführen. Zu diesem Zweck umfasst die Vorrichtung 200 ferner ein Führungselement 120, welches dazu ausgebildet ist, die Freiheitsgrade der Bewegung der Partikel 200 einzuschränken, während sich die Partikel 200 durch den Messbereich 110 bewegen.

In dem in Fig. 1 dargestellten Ausführungsbeispiel werden die Partikel 200 zur Messung in einen Trichter 330 der Zuführreinrichtung 300 gegeben und über die als Vibrationsrinne ausgebildete Zuteilrinne 310 in Richtung des Führungselementes 120 transportiert, wobei die Zuteilrinne 310 über die Antriebseinrichtung 320 gesteuert wird.

Im dargestellten Ausführungsbeispiel ist das Führungselement 120 als Gleitbahn ausgebildet, die mit einem vorgegebenen Neigungswinkel $\alpha$ geneigt gegenüber der optischen Achse 210 angeordnet ist. Der Neigungswinkel $\alpha$ kann vorteilhaft variiert werden, beispielsweise abhängig von der Art, Anzahl, Form und/oder Größe der Partikel 200, oder auch abhängig von der Oberflächenbeschaffenheit des Führungselementes 120. Durch die Neigung des Führungselementes 120 bewegen sich die Partikel vorteilhaft unter der Wirkung der Gravitationskraft entlang der Oberfläche Führungselementes 120 durch den Messbereich, wobei die Bewegungsgeschwindigkeit der Partikel insbesondere von der Beschaffenheit der Partikel und der Beschaffenheit der Oberfläche des Führungselementes 120 abhängt. Nach Durchlaufen des Messbereichs 110 können die Partikel 200 beispielsweise in einem Auffangbehälter 160 aufgefangen werden.

Die Zuführrinne 310 ist vorzugsweise über ein Verbindungselement 150 mit dem Führungselement 120 verbunden, wobei das Verbindungselement 150 insbesondere ein flexibles Material umfasst. Als Verbindungselement 150 kann beispielsweise eine lösbar befestigte Abdeckung oder auch ein Einmalklebeband eingesetzt werden. Es können auch vorteilhaft für unterschiedliche Partikelarten unterschiedliche Verbindungselemente 150 eingesetzt werden.

Durch das Verbindungselement 150 wird vorteilhaft eine flüssige Bewegung der Partikel erreicht und insbesondere ein Hüpfen der Partikel vermieden. Auf diese Weise bleiben die Partikel, während sich die Partikel durch den Messbereich bewegen, vorteilhaft durchgängig in Kontakt mit dem Führungselement 120, insbesondere in Kontakt mit der Oberfläche der Gleitbahn.

Zum Aufnehmen digitaler Bilder der Partikel, die sich zum Aufnahmezeitpunkt im Messbereich 110 befinden, umfasst die Vorrichtung 100 ein Kamerasystem 140 mit einer Digitalkamera 141 und einem Objektiv 142.

Im dargestellten Beispiel befinden sich die Partikel 201 und 202 im Messbereich 110. Der Messbereich 110 wird mit einer Lichtquelle 130 beleuchtet, wobei die Lichtquelle 130 im dargestellten Ausführungsbeispiel eine Mehrzahl Leuchtmittel 131 umfasst. Die Lichtquelle 130 ist vorteilhaft als Blitzlicht, vorzugsweise als LED-Stroboskoplicht, ausgebildet, wodurch eine kontinuierliche Aufnahme von Bildern ermöglicht wird. Zudem ist die Lichtquelle 130 vorzugsweise derart ausgebildet, dass eine im Wesentlichen homogene Ausleuchtung des Messbereichs 110 gewährleistet ist.

Das Objektiv 142 ist vorzugsweise als wechselbares Objektiv ausgebildet, wobei je nach Einsatzzweck, insbesondere abhängig von der zu messenden Partikelart und/oder abhängig vom Größenbereich der erwarteten Partikelgrößen, unterschiedliche Objektive eingesetzt werden können. Insbesondere können vorteilhaft Eigenschaften des eingesetzten Objektivs 142, wie beispielsweise Vergrößerung, Schärfentiefe und/oder Bildfeld, abhängig von den zu messenden Partikeln gewählt werden. Ferner wird als Objektiv 142 vorzugsweise ein telezentrisches Objektiv eingesetzt, insbesondere um die Partikel ohne perspektivische Verzerrung abzubilden.

Im dargestellten Ausführungsbeispiel sind Lichtquelle 130 und Kamerasystem 140 auf gegenüberliegenden Seiten des Führungselementes 120 angeordnet, so dass die Partikel 201 und 202 als Schattenprojektion abgebildet werden. Zu diesem Zweck ist das als Gleitbahn ausgebildete Führungselement 120 zumindest innerhalb des Messbereichs 110 ganz oder teilweise optisch transparent. Dementsprechend weist das Führungselement vorzugsweise zumindest abschnittsweise ein optisch transparentes Material, wie zum Beispiel Glas oder Kunststoff auf.

Die von dem Kamerasystem 140 aufgenommenen digitalen Bilder werden von einer Auswerteeinheit ausgewertet und die Form und/oder die Größe der abgebildeten Partikel ermittelt. Vorzugsweise wird die Auswerteinheit durch einen separaten, in Fig. 1 nicht dargestellten Computer bereitgestellt, der mit der Kamera kommunikativ verbunden ist. Vorteilhaft kann die Auswerteeinheit als eine für diesen Zweck angepasste Software ausgebildet sein, die von dem Computer ausgeführt wird.

Bei der Auswertung eines der aufgenommenen digitalen Bilder wird von der Auswerteeinheit vorteilhaft wenigstens eine Abbildung eines individuellen Partikels in dem jeweiligen digitalen Bild identifiziert und in Abhängigkeit der identifizierten Abbildung wenigstens eines die Größe und/oder die Form des individuellen Partikels beschreibenden Parameters ermittelt. Wie oben ausgeführt, erfolgt die Abbildung des Partikels vorzugsweise als Schattenprojektion, d.h. als zweidimensionaler Umriss. Ermittelbare Parameter können beispielweise einen oder mehrere der Parameter Äquivalentdurchmesser, minimaler Feret-Durchmesser, maximaler Feret-Durchmesser, maximale Sehnenlänge einer Umrisskurve der Abbildung umfassen. Ferner kann die Auswerteinheit auch dazu ausgebildet sein, verschiedene Formparameter zu ermitteln. Ermittelbare Formparameter können beispielsweise ein Aspektverhältnis, d.h. insbesondere ein Verhältnis zwischen minimalem und maximalem Durchmesser, eine Zirkularität und/oder eine Konvexität umfassen.

Der separate Computer kann vorteilhaft mit der Antriebseinrichtung 320 verbunden und dazu ausgebildet sein, die Antriebseinrichtung 320 zu steuern, so dass ein Benutzer die Zuführgeschwindigkeit flexibel anpassen kann. Vorteilhaft kann auch die Belichtungszeit der Aufnahmen von einem Benutzer eingestellt werden, wobei der separate Computer zu diesem Zweck mit dem Kamerasystem 140 und/oder der Lichtquelle 130 kommunikativ verbunden sein kann, und dazu ausgebildet sein kann, das Kamerasystem 140 und/oder die Lichtquelle 130 zu steuern.

In dem in Fig. 1 dargestellten Ausführungsbeispiel verläuft die optische Achse 210 des Kamerasystems 140 waagerecht. Dies kann insbesondere vorteilhaft sein, wenn ein bestehendes Analysegerät umgebaut werden soll, bei dem eine solche Kameraanordnung vorgegeben ist. In diesem Fall ist die Achse des als geneigte Gleitbahn ausgebildeten Führungselementes 120 in Längsrichtung, d.h. in Bewegungsrichtung der Partikel 200, zur optischen Achse um den in Fig. 1 dargestellten Neigungswinkel α geneigt.

Dies führt zu einer Abbildung der Partikel 200, welche die Form der Partikel nicht korrekt wiedergibt, insbesondere wenn die Partikel 200 eine im Wesentlichen längliche Form aufweisen, beispielsweise eine im Wesentlichen zylindrische oder ellipsoide Form. Um den Durchmesser in Längsrichtung des Partikels zutreffend aus der Abbildung des Partikels zu entnehmen, müsste die Längsachse des jeweiligen Partikels senkrecht zur optischen Achse 210 ausgerichtet sein. Bei der in Fig. 1 dargestellten Anordnung ist aber ein Partikel je nach Orientierung, d.h. je nach Ausrichtung der Längsachse des Partikels, in fast allen Fällen mehr oder weniger stark gegenüber der optischen Achse 210 geneigt.

Daher kann das Ermitteln der Form und/oder der Größe eines abgebildeten Partikels vorteilhaft eine Umrechnung in Abhängigkeit des Neigungswinkels des Führungselementes 120 und in Abhängigkeit der Orientierung des jeweils abgebildeten Partikels umfassen.

Vorteilhaft kann die folgende Umrechnungsformel für das Ermitteln des tatsächlichen Durchmessers in Längsrichtung eines länglichen Partikels aus dem anhand der Abbildung des Partikels gemessenen Durchmessers in Längsrichtung des Partikels verwendet werden:

$$d_{real} = d_{meas} \cdot \sqrt{\frac{(\sin\beta)^2}{(\sin\alpha)^2} + (\cos\beta)^2}$$

für

$$0° < \alpha < 90°$$

$$0° \leq \beta \leq 90°$$

mit

$d_{real}$: Tatsächlicher Durchmesser des Partikels,
$d_{meas}$: Gemessener Durchmesser des Partikels unter der Annahme, die Längsachse des Partikels sei senkrecht zur optischen Achse ausgerichtet,
$\alpha$: Neigungswinkel der Gleitbahn,
$\beta$: Drehwinkel der Längsachse des abgebildeten Partikels, wobei $\beta = 0°$ bei einer waagerechten Abbildung der Längsachse des Partikels definiert ist.

Für bestimmte Werte der Winkel $\alpha$ bzw. $\beta$ vereinfacht sich die obige Umrechnungsformel wie folgt:

$$\beta = 0° \qquad \Rightarrow \qquad d_{real} = d_{meas}$$

$$\alpha = 90° \qquad \Rightarrow \qquad d_{real} = d_{meas}$$

$$\beta = 90° \qquad \Rightarrow \qquad d_{real} = \frac{d_{meas}}{\sin\alpha}$$

Die oben genannten Umrechnungsformeln sind streng nur für ein mathematisch idealisiertes längliches Partikel in Form eines eindimensionalen Geradenabschnitts gültig. Dennoch kann bei Verwendung dieser Formeln bereits die Form und/oder die Größe der Partikel verbessert ermittelt werden. Vorteilhaft können die oben angegebenen Umrechnungsformeln in Abhängigkeit der erwarteten realen Form der Partikel angepasst werden. Denkbar ist auch ein iteratives Auswerten der aufgenommenen Bilder, wobei iterativ die Form der Partikel ermittelt wird und in Abhängigkeit der ermittelten Form die verwendete Umrechnungsformel angepasst wird.

Die in Fig. 2 dargestellte Vorrichtung 100' unterscheidet sich von der in Fig. 1 dargestellten Vorrichtung 100 lediglich darin, dass das Kamerasystem 140 und die Lichtquelle 130 derart angeordnet sind, dass die optische Achse 211 des Kamerasystems 140 senkrecht zur Oberfläche der Gleitbahn 120 verläuft. Bei dieser Anordnung kann vorteilhaft auf die oben beschriebene Umrechnung verzichtet werden.

In einer besonders vorteilhaften Ausgestaltung der Erfindung kann vorgesehen sein, dass das Führungselement 120 und/oder die Zuführeinrichtung 300 dazu ausgebildet ist, die Längsachse der Partikel 200 im Wesentlichen parallel zur Bewegungsrichtung der Partikel 200 auszurichten.

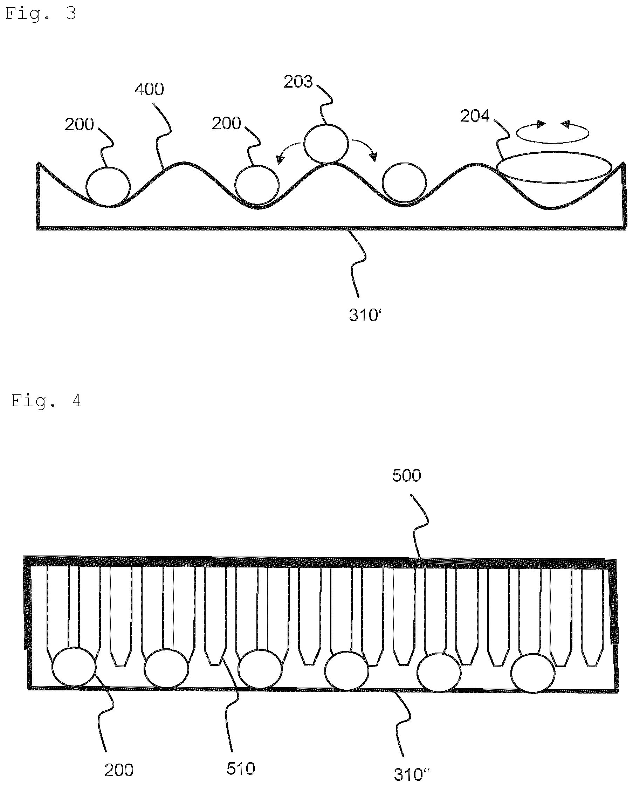

Zwei Beispiele, wie dies erreicht werden kann, sind in den Figuren 3 und 4 dargestellt.

In Fig. 3 ist ein beispielhaftes Querschnittsprofil 400 einer Zuführrinne 310' senkrecht zur Bewegungsrichtung der Partikel 200 dargestellt. Das dargestellte Querschnittsprofil 400 ist wellenförmig und weist eine Mehrzahl Senken auf, wobei sich die Partikel 200 auf diese Weise unter der Wirkung der Gravitation automatisch so ausrichten, dass ihre Längsachse parallel zur Bewegungsrichtung ausgerichtet ist. Um einen energetisch günstigeren Zustand zu erreichen, bewegt sich beispielsweise das Partikel 203, das sich auf einer Erhöhung zwischen zwei Senken befindet, in Richtung einer der beiden Senken, und das Partikel 204, das sich zwar in einer Senke befindet, dessen Längsachse aber quer zur Bewegungsrichtung ausgerichtet ist, dreht automatisch seine Längsachse, um einen energetisch günstigeren Zustand zu erreichen.

Vorteilhaft kann die Form, die Tiefe und/oder die Anzahl der Senken an die durchschnittliche Größe und/oder Form der Partikel 200 angepasst werden.

In Fig. 4 ist schematisch ein Ausrichtungselement 500 dargestellt, welches beispielhaft oberhalb einer Zuführrinne 310" angeordnet werden kann. Das Ausrichtungselement 500 umfasst im dargestellten Ausführungsbeispiel eine Mehrzahl senkrecht verlaufender flexibler Lamellen 510. Die Form, Länge und/oder Anzahl der Lamellen 510 ist vorteilhaft an die durchschnittliche Größe und/oder Form der Partikel 200 angepasst, um zu erreichen, dass sich die Längsachse der Partikel 200 parallel zur Bewegungsrichtung der Partikel 200 ausrichtet.

Die im Zusammenhang mit den Figuren 3 und 4 für die Zuführrinne beschriebenen Maßnahmen können vorteilhaft alternativ oder kumulativ auch für das Führungselement 120 vorgesehen werden, vorzugsweise aber nur außerhalb des Messbereichs 110.

Die Längsachse der Partikel 200 im Wesentlichen parallel zur Bewegungsrichtung der Partikel 200 auszurichten, bietet insbesondere den Vorteil, dass bei dieser Ausrichtung eines Partikels bei dessen Abbildung β = 90° ist, d.h. die Längsachse des Partikels in der Abbildung des Partikels senkrecht verläuft, so dass auf diese Weise bei der in Fig. 1 dargestellten Anordnung vorteilhaft die oben beschriebene vereinfachte Umrechnung mit Hilfe der Formel $d_{real} = \dfrac{d_{meas}}{\sin \alpha}$ erfolgen kann.

Zudem wird durch den Einsatz eines Ausrichtungselementes 150 besonders vorteilhaft ein Überlappen von Partikeln während der Aufnahme des digitalen Bildes vermieden. Ferner unterstützt das Ausrichtungselement 150 das Erreichen eines durchgängigen Kontakts der Partikel 200 mit dem Führungselement 120, während sich die Partikel durch den Messbereich 110 bewegen. Dies bietet den besonderen Vorteil, dass die Partikel 200 bei der Aufnahme der Bilder einen bekannten Abstand zum Kamerasystem 140 haben und sich damit vorzugsweise immer im Fokus des Kamerasystems 140 befinden.

Die Erfindung ermöglicht vorteilhaft, Partikelformen und/oder Partikelgrößen auf vereinfachte und verbesserte Weise zu ermitteln, insbesondere mittels dynamischer Bildanalyse. Die Erfinder konnten eine Verbesserung gegenüber aus dem Stand der Technik bekannte Methoden der dynamischen Bildanalyse bereits durch Messungen verifizieren. Beispielsweise konnte der Anteil an gebrochenen Reiskörnern in einer Probe von Reiskörnern mit Hilfe des beschriebenen Verfahrens mit einer gegenüber herkömmlichen Methoden verbesserten Genauigkeit ermittelt werden.

Die Anwendungsmöglichkeiten der Erfindung sind vielfältig, da das beschriebene Verfahren und die beschriebene Vorrichtung prinzipiell für alle Anwendungen eingesetzt werden können, für die auch herkömmliche Methoden der dynamischen Bildanalyse eingesetzt werden. Durch die erhöhte Präzision sind jedoch auch Einsatzgebiete denkbar, für die herkömmliche Methoden der dynamischen Bildanalyse bisher nicht eingesetzt wurden.

**Patentansprüche**

1. Verfahren zur Ermittlung von Form und/oder Größe von Partikeln (200), umfassend die Schritte:

   - Leiten einer Vielzahl Partikel (200) durch einen vorgegebenen Messbereich (110), wobei die Freiheitsgrade der Bewegung der Partikel (200) durch ein Führungselement (120) eingeschränkt sind, während sich die Partikel (200) durch den Messbereich (110) bewegen,
   - Beleuchten des Messbereichs mit einer Lichtquelle (130),
   - Aufnehmen, mit einem Kamerasystem (140), wenigstens eines digitalen Bildes der Partikel (201, 202), die sich zum Aufnahmezeitpunkt im Messbereich (110) befinden,
   - Ermitteln der Form und/oder der Größe der abgebildeten Partikel durch Auswerten des wenigstens einen aufgenommenen digitalen Bildes mittels einer Auswerteeinheit.

2. Verfahren nach Anspruch 1, wobei das Auswerten eines der aufgenommenen digitalen Bilder die folgenden Schritte umfasst:

   - Identifizieren wenigstens einer Abbildung eines individuellen Partikels in dem digitalen Bild,
   - Ermitteln wenigstens eines die Größe und/oder die Form des individuellen Partikels beschreibenden Parameters in Abhängigkeit der identifizierten Abbildung, insbesondere umfassend wenigstens einen der Parameter
   - Äquivalentdurchmesser,

- minimaler Feret-Durchmesser,
- maximaler Feret-Durchmesser,
- maximale Sehnenlänge einer Umrisskurve der Abbildung,
- Zirkularität,
- Konvexität, oder
- Aspektverhältnis.

3. Verfahren nach einem der Ansprüche 1 oder 2, wobei das Führungselement (120) als Gleitbahn ausgebildet ist, welche so angeordnet ist, dass die Oberfläche der Gleitbahn um einen vorgegebenen Neigungswinkel geneigt ist, und wobei sich die Partikel unter der Wirkung der Gravitationskraft entlang der Oberfläche der Gleitbahn durch den Messbereich bewegen.

4. Verfahren nach Anspruch 3, wobei die optische Achse (211) des Kamerasystems (140) senkrecht zur Oberfläche der Gleitbahn (120) verläuft.

5. Verfahren nach einem der Ansprüche 1 bis 3, wobei die optische Achse (210) des Kamerasystems (140) waagerecht verläuft, und wobei das Ermitteln der Form und/oder der Größe eines abgebildeten Partikels eine Umrechnung in Abhängigkeit des Neigungswinkels des Führungselementes (120) und in Abhängigkeit der Orientierung des jeweils abgebildeten Partikels umfasst.

6. Verfahren nach einem der vorstehenden Ansprüche, wobei das Führungselement (120) zumindest teilweise optisch transparent ist, wobei die Lichtquelle (130) und das Kamerasystem (140) auf gegenüberliegenden Seiten des Führungselementes (120) angeordnet sind, und wobei die Partikel (201, 202) als Schattenprojektion abgebildet werden.

7. Verfahren nach einem der vorstehenden Ansprüche, wobei die Partikel (200) dem Führungselement (120) über eine Zuführrinne (310) einer Zuführeinrichtung (300) zugeführt werden, wobei die Zuführeinrichtung (300) dazu ausgebildet ist, Partikel (200) mit einer einstellbaren Zuführgeschwindigkeit über die Zuführrinne (310) zuzuführen.

8. Verfahren nach Anspruch 7, wobei die Zuführrinne (310) über ein Verbindungselement (150) mit dem Führungselement verbunden ist, wobei das Verbindungselement (150) insbesondere ein flexibles Material umfasst.

9. Verfahren nach einem der vorstehenden Ansprüche, wobei die Partikel (200) im Wesentlichen eine längliche Form, insbesondere im Wesentlichen eine zylindrische oder ellipsoide Form aufweisen.

10. Verfahren nach einem der vorstehenden Ansprüche

wobei das Führungselement (120) und/oder die Zuführeinrichtung (300) dazu ausgebildet ist, die Längsachse der Partikel (200) im Wesentlichen parallel zur Bewegungsrichtung der Partikel (200) auszurichten.

11. Verfahren nach Anspruch 10, wobei der Querschnitt des Führungselementes und/oder der Zuführrinne (310') der Zuführeinrichtung (300) senkrecht zur Bewegungsrichtung der Partikel (200) ein Profil (400) mit einer Mehrzahl Senken aufweist, wobei die Form, Tiefe und/oder Anzahl der Senken an die durchschnittliche Größe und/oder Form der Partikel (200) angepasst ist, wobei das Profil (400) insbesondere wellenförmig ausgebildet ist, und/oder oberhalb der Zuführrinne (310") der Zuführeinrichtung (300) ein Ausrichtungselement (500) mit einer Mehrzahl senkrecht verlaufender flexibler Lamellen (510) angeordnet ist, wobei die Form, Länge und/oder Anzahl der Lamellen (510) insbesondere an die durchschnittliche Größe und/oder Form der Partikel (200) angepasst ist.

12. Vorrichtung (100) zur Ermittlung von Form und/oder Größe von Partikeln (200), umfassend:

- eine Zuführeinrichtung (300) mit einer Zuführrinne (310, 310', 310"), wobei die Zuführeinrichtung (300) dazu ausgebildet ist, Partikel (200) mit einer einstellbaren Zuführgeschwindigkeit über die Zuführrinne (310) einem vorgegebenen Messbereich (110) zuzuführen,
- Führungselement (120), welches dazu ausgebildet ist, die Freiheitsgrade der Bewegung der Partikel (200) einzuschränken, während sich die Partikel (200) durch den Messbereich (110) bewegen,
- eine Lichtquelle (130) zum Beleuchten des Messbereichs,
- ein Kamerasystem (140) zum Aufnehmen wenigstens eines digitalen Bildes der Partikel (201, 202), die sich zum Aufnahmezeitpunkt im Messbereich (110) befinden,
- eine Auswerteeinheit zum Ermitteln der Form und/oder der Größe der abgebildeten Partikel durch Auswerten des wenigstens einen aufgenommenen digitalen Bildes.

Fig. 1

Fig. 2

Fig. 3

Fig. 4

Europäisches
Patentamt

European
Patent Office

Office européen
des brevets

## EUROPÄISCHER RECHERCHENBERICHT

Nummer der Anmeldung

EP 25 18 0998

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2012 037296 A (TAISEI CORP) 23. Februar 2012 (2012-02-23) | 1-4, 7-10,12 | INV. G01N15/02 |
| Y | * Absätze [0018], [0027] - [0029], [0033] - [0034]; Abbildung 1 * | 11 | G01N15/14 G01N15/0227 |
|  | ----- |  |  |
| X | JP 2001 165845 A (NIKKISO CO LTD) 22. Juni 2001 (2001-06-22) | 1,3,4, 6-8,12 | ADD. G01N15/00 |
| Y | * Absätze [0012], [0014]; Abbildung 1 * | 11 |  |
|  | ----- |  |  |
| X | US 2006/221338 A1 (CANTY THOMAS M [US] ET AL) 5. Oktober 2006 (2006-10-05) | 1-5,9, 10,12 |  |
| Y | * Absätze [0011], [0038] - [0039]; Abbildung 7 * | 11 |  |
|  | ----- |  |  |
| X | JP 2019 113429 A (HAZAMA ANDO CORP) 11. Juli 2019 (2019-07-11) * Absatz [0018]; Abbildungen 1-2 * | 1,11,12 |  |
|  | ----- |  |  |
| X | CN 219 737 187 U (UNIV CHINA GEOSCIENCES WUHAN) 22. September 2023 (2023-09-22) | 1,5,7,8, 12 |  |
| Y | * Absätze [0004], [0038], [0040]; Abbildung 1 * | 11 | RECHERCHIERTE SACHGEBIETE (IPC) |
|  | ----- |  | G01N |
| Y | JP 2023 003741 A (FUJITA CORP) 17. Januar 2023 (2023-01-17) * Abbildung 9 * | 11 |  |
|  | ----- |  |  |

Der vorliegende Recherchenbericht wurde für alle Patentansprüche erstellt

| Recherchenort | Abschlußdatum der Recherche | Prüfer |
|---|---|---|
| Den Haag | 16. Oktober 2025 | Kramer, Joanne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 18 0998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2025

| Im Recherchenbericht angeführtes Patentdokument | Datum der Veröffentlichung | Mitglied(er) der Patentfamilie | Datum der Veröffentlichung |
|---|---|---|---|
| JP 2012037296 A | 23-02-2012 | JP 5519441 B2<br>JP 2012037296 A | 11-06-2014<br>23-02-2012 |
| JP 2001165845 A | 22-06-2001 | KEINE | |
| US 2006221338 A1 | 05-10-2006 | AT E404860 T1<br>EP 1464949 A2<br>US 2004189991 A1<br>US 2006221338 A1 | 15-08-2008<br>06-10-2004<br>30-09-2004<br>05-10-2006 |
| JP 2019113429 A | 11-07-2019 | JP 7030507 B2<br>JP 2019113429 A | 07-03-2022<br>11-07-2019 |
| CN 219737187 U | 22-09-2023 | KEINE | |
| JP 2023003741 A | 17-01-2023 | JP 7592369 B2<br>JP 2023003741 A | 02-12-2024<br>17-01-2023 |

EPO FORM P0461

Für nähere Einzelheiten zu diesem Anhang : siehe Amtsblatt des Europäischen Patentamts, Nr.12/82